(19) Europäisches Patentamt

European Patent Office

Office européen des brevets

(11) EP 3 748 571 A1

(12) EUROPEAN PATENT APPLICATION

(43) Date of publication:
09.12.2020 Bulletin 2020/50

(51) Int Cl.:
G06T 1/20 (2006.01)          G06T 3/40 (2006.01)
G06T 5/00 (2006.01)

(21) Application number: 20163933.3

(22) Date of filing: 18.03.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 07.06.2019 US 201916434566

(71) Applicant: RGB Systems, Inc.
Anaheim, CA 92805 (US)

(72) Inventor: WARD, Graham Peter
Anaheim, CA California 92805 (US)

(74) Representative: ABG Intellectual Property Law,
S.L.
Avenida de Burgos, 16D
Edificio Euromor
28036 Madrid (ES)

(54) MULTILINE SCALER PROCESSOR

(57)   An image scaling processor is disclosed comprising a multi-pixel vertical scaler and a multiline horizontal scaler. The multi-pixel vertical scaler includes a plurality of convolvers that convolve a plurality of pixels in parallel with a vertical kernel comprising weights to generate vertically scaled pixels. The multiline horizontal scaler includes horizontal scaling circuits configured to receive vertically scaled pixels from respective line stores, wherein a given horizontal scaling circuit comprises an input configured to receive one vertically scaled pixel at a time, a pipeline of convolver stages configured to, at each stage, convolve vertically scaled pixels with respective horizontal kernel coefficients. The pipeline transfers pixels from a last convolver stage of the pipeline to a second memory, wherein the pixels from the last convolver stage of the pipeline are horizontally and vertically scaled, wherein the pixels stored in the second memory are arranged to be displayed as a scaled image.

FIG. 1A

EP 3 748 571 A1

**Description**

FIELD OF THE DISCLOSURE

The present disclosure relates to graphics image processing. More specifically, the present disclosure relates to mechanisms and processes for scaling an image.

BACKGROUND

As displays have ever higher resolution with vastly increasing numbers of pixels, it has become more challenging to scale images, as scaling engines must process more and more pixels in order to scale images appropriately. Accordingly, it is generally desirable to have a scaling processor architecture that can efficiently process such large numbers of pixels at high speed.

SUMMARY

The systems, methods and devices of this disclosure each have several innovative aspects, no single one of which is solely responsible for the all of the desirable attributes disclosed herein. Details of one or more implementations of the subject matter described in this specification are set forth in the accompanying drawings and the description below.

An image scaling processor is disclosed comprising a multi-pixel vertical scaler and a multiline horizontal scaler. The multi-pixel vertical scaler includes a plurality of convolvers that convolve a plurality of pixels in parallel with a vertical kernel comprising weights to generate vertically scaled pixels. The multiline horizontal scaler includes horizontal scaling circuits configured to receive vertically scaled pixels from respective line stores, wherein a given horizontal scaling circuit comprises an input configured to receive one vertically scaled pixel at a time, a pipeline of convolver stages configured to, at each stage, convolve vertically scaled pixels with respective horizontal kernel weights. The pipeline transfers pixels from a last convolver stage of the pipeline to a second memory, wherein the pixels from the last convolver stage of the pipeline are horizontally and vertically scaled, wherein the pixels stored in the second memory are arranged to be displayed as a scaled image.

An aspect of the present disclosure relates to an image scaling processor configured to at least upscale an image, comprising: a vertical kernel addressing circuit, the vertical kernel addressing circuit configured to address memory that stores vertical kernel coefficients; a multi-pixel vertical scaling module comprising: a plurality of multi-pixel vertical scaling circuits configured to receive image pixels in parallel from respective image line stores, wherein a given vertical scaling circuit in the plurality of vertical scaling circuits comprises: an input configured to receive pixels from a respective line store; a convolver configured to: receive at least a first kernel coefficient in accordance with addressing of the memory that stores vertical kernel coefficients by the vertical kernel addressing circuit; convolve the first kernel coefficient with respective pixels from the respective line store to generate vertically scaled pixels; output the vertically scaled pixels to a first memory; a horizontal kernel addressing circuit, the horizontal kernel addressing circuit configured to address memory that stores horizontal kernel coefficients; a multiline horizontal scaling module comprising: a plurality of horizontal scaling circuits configured to receive pixels from respective image line stores, wherein a given horizontal scaling circuit in the plurality of horizontal scaling circuits comprises: a serial input configured to receive one vertically scaled pixel at a time from the first memory; a pipeline comprising a plurality of convolver stages configured to shift vertically scaled pixels from the first memory through the plurality of convolver stages and, at each stage, convolve the vertically scaled pixels with respective horizontal kernel coefficients in a set of horizontal kernel coefficients accessed in accordance with addressing of the memory that stores horizontal kernel coefficients by the horizontal kernel addressing circuit, the pipeline configured to transfer pixels from a last convolver stage of the pipeline of convolvers to a second memory, wherein the pixels from the last convolver stage of the pipeline are horizontally and vertically scaled, wherein the pixels stored in the second memory are arranged to be displayed as a scaled image.

An aspect of the present disclosure relates to an image processor, comprising: multi-pixel vertical processing circuit comprising a plurality of vertical processing circuits configured to receive image pixels from respective image line stores and to convolve, in parallel, the received image pixels with respective coefficients and output vertically processed pixels to a first memory; a multiline horizontal processing module comprising: a plurality of horizontal processing circuits configured to receive pixels from respective image line stores, wherein a given horizontal processing circuit in the plurality of horizontal processing circuits comprises: an input configured to receive one vertically processed pixel at a time from the first memory; a convolver pipeline comprising a plurality of convolver stages configured to shift vertically processed pixels from the first memory through the plurality of convolver stages and, at a given stage, convolve the vertically processed pixels with respective horizontal kernel coefficients in a set of horizontal kernel coefficients, the convolver pipeline configured to transfer pixels from a last convolver stage of the pipeline of convolvers to a second memory, wherein the pixels from the last convolver stage of the pipeline are horizontally and vertically processed, wherein the pixels stored in the second memory are arranged to be displayed as a processed image.

An aspect of the present disclosure relates to an method, comprising: using a multi-pixel vertical processing module comprising a plurality of multi-pixel vertical processing circuits to convolve, in parallel, image pixels received from respective line stores with respective coefficients and outputting vertically processed pixels to a first memory; using a multiline horizontal processing module to access from the first memory and to horizontally process the vertically processed pixels using parallel convolver pipelines comprising a plurality of convolver stages that generate products of the vertically processed pixels with respective coefficients; transferring vertically and horizontally processed pixels from a last convolver stage of each of the convolver pipelines to a second memory, wherein the pixels stored in the second memory are arranged to be displayed as a processed image.

BRIEF DESCRIPTION OF THE DRAWINGS

Throughout the drawings, reference numbers are re-used to indicate correspondence between referenced elements. The drawings are provided to illustrate embodiments of the subject matter described herein and not to limit the scope thereof.

Figure 1A illustrates an example image scaler system.
Figure 1B illustrates an example single pixel vertical scaling engine.
Figure 1C illustrates example impulse response function curves.
Figure 1D illustrates an example multi-pixel vertical scaling engine.
Figure 2A illustrates an example single line horizontal scaling engine.
Figure 2B illustrates an example multiline horizontal scaling engine.
Figure 3 illustrates an example multiline horizontal scaling engine and output circuitry
Figure 4 illustrates an example image scaling process.

DETAILED DESCRIPTION

As discussed above, as displays have ever higher resolution with vastly increasing numbers of pixels, it has become more challenging to scale images, as scaling engines must process more and more pixels in order to scale images appropriately. Accordingly, described herein are apparatus and processes that enable a large number of pixels to be processed at high speed to thereby scale images, such as video images. An aspect of the present disclosure relates to a multiline scaler processor.

Scaler processors (sometimes referred to simply as "scalers"), are utilized to resize images. For example, scaler processors may scale the size of an image or video frame (e.g., from a lower resolution to a higher resolution, or from a higher resolution to a lower resolution). For example, a source image may be in an original format size of 1920x1080 pixels (sometimes referred to as "HD") and may need to be upscaled to 3840x2160 pixels (sometimes referred to as "4K"), 7680x4320 pixels (sometimes referred to as "8K"), or 15360x8640 (sometimes referred to as "16K") pixels, to fit a corresponding display type. Scalers may be used in monitors, televisions, projectors, video teleconferencing equipment, mobile devices, and other display systems.

Thus, scalers may accept a wide range of input signal formats and then generate video output to match displays of various native resolution.

Conventionally, some scalers operate serially on one pixel per clock. Conventional approaches to scaling a two dimensional (2D) image use two passes, a vertical scaling pass and a horizontal scaling pass, where scaling process is basically the same for the vertical and horizontal scaling passes.

In order to increase the bandwidth and performance of such a conventional scaler, one approach is to design the scaler to scale multiple pixels of a given line (both vertically and horizontally) in parallel. Such parallel processing of pixels in a given line allows the scaler to perform higher bandwidth scaling without increasing the scaler clock frequency. In the vertical scaler (where the same scaling coefficient (weight) may be applied to each pixel in a given line), this approach may be relatively straightforward. However, to enable the horizontal scaler (where different coefficients are being applied to different pixels in the same line at a given clock cycle) to process multiple pixels in parallel is highly complex.

Further, the foregoing approach does not easily scale-up in performance. For example, to go from a single-pixel scaler to a dual-pixel scaler (where two pixels are convolved and scaled in a single clock cycle) is difficult because of the high speed processing that is needed to accomplish the horizontal scaling of two pixels in one clock cycle. It is increasingly difficult to go to a quad-pixel scaler (where four pixels are convolved and scaled in a single clock cycle), and even more difficult to go to an eight-pixel scaler (where eight pixels are convolved and scaled in a single clock cycle). The challenge of parallel processing pixels increases as the number of pixels being processed in parallel increases.

Described herein is a highly scalable multiline scaler processor which may have at least an order of magnitude improved performance as compared to conventional approaches. The disclosed multiline scaler processor is optionally reconfigurable using configuration data stored in memory (e.g., a scaler profile stored as firmware in non-volatile memory, such as ROM, EEPROM or FLASH memory). The highly scalable multiline scaler processor may be scaled to process at higher and higher bandwidths, as needed.

One or more instances of the multiline scaler processor (or portions thereof) may be implemented in an integrated circuit (e.g., a system on chip (SoC), an application specific integrated circuit (ASIC), a gate array, a field programmable gate array (FPGA) etc.), a processor system, a processor core, using discrete circuit components, and/or the like. Optionally, one or more instances of the multiline scaler processor may be mounted on a circuit card which may include a connector enabling the circuit card to be attached to (e.g., plugged into) a video processing/display system (e.g., to a backplane or cable).

An aspect of the multiline scaler processor relates to separating the horizontal and vertical scaling processes to facilitate a multi-pixel vertical scaler and a multiline horizontal scaler. In this implementation, the horizontal scaler is handled differently than the vertical scaler, in contrast to conventional approaches. This approach is non-intuitive as conventionally, vertical and horizontal scaling have used a common approach. Further, using the multiline horizontal scaling technique described herein presents challenges, as a large amount of scaled pixel data is being generated at a time, which needs to be stored and/or otherwise processed. Such challenges are addressed as discussed herein.

When scaling up a video frame, new pixels are inserted between the original pixels in the input frame, a given new pixel value is calculated as a weighted sum of nearby original pixel values. The number of original pixel values and their weights/coefficients may depend on the scaling algorithm utilized. However, including relatively more original pixels in the calculation results in a higher quality output. The set of weights/coefficients may be referred to as a "kernel" and may be used in a matrix being convolved with pixel values. A kernel addressing circuit may be utilized to select a given weight/coefficient stored in a weight/coefficient memory based on the pixel position, the scaling factor, and/or other criteria as discussed elsewhere herein.

The vertical scaler may have its performance enhanced utilizing a multi-pixel scaling engine as it is relatively less complex to vertical scale multiple pixels in a given line at the same time (e.g., because each pixel in a given line may be convolved using the same weight/coefficient). The horizontal scaling engine may have its performance enhanced by scaling multiple lines simultaneously (rather than scaling multiple pixels of the same line in parallel) using a single pixel scaling engine for each line. Thus, the present scaling architecture enables scaling to be performed at high speed with reduced complex hardware as compared to conventional approaches, where vertical and horizontal scaling are handled in similar manner.

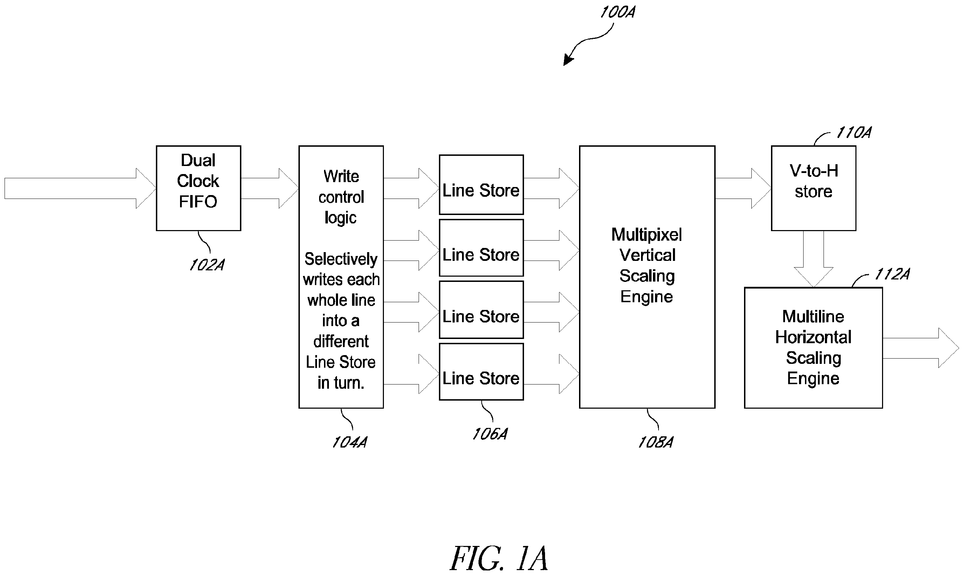

Figure 1A illustrates an example image scaler 100A. A FIFO 102A (a first-in-first out data storage device) receives and stores image pixel values. The FIFO 102A may be a single clock FIFO or may optionally be a dual clock FIFO (where the input clock may operate at a different frequency than the output clock). Write control logic 104A selectively writes the pixel values into line stores 106A, where each line store stores a corresponding horizontal image line (the entire line or a portion thereof). In this example, there are four line stores 106A, as in many instances four pixels in both the horizontal and the vertical are needed to properly scale an image, although fewer or more line stores may be used. The line stores106A feed respective line pixels to a multi-pixel vertical scaling engine 108A (which may scale multiple pixels at a time from a given line), as will be discussed in greater detail herein. The vertically scaled pixels, output from the vertical scaling engine 108A, are stored in a vertical-to-horizontal data store 110A. Multiple lines are output in parallel from the vertical-to-horizontal data store 110A to a multiline horizontal scaling engine 112A (which uses a different architecture than the vertical scaling engine). The scaled pixels output from the multiline horizontal scaling engine 112A will be stored in memory and/or processed as discussed herein.

It is understood that if the image is in a color space, such as the RGB space, a separate scaler may be used for each color component (e.g., a scaler for the R pixels, a scaler for the G pixels, and a scaler for the B pixels).

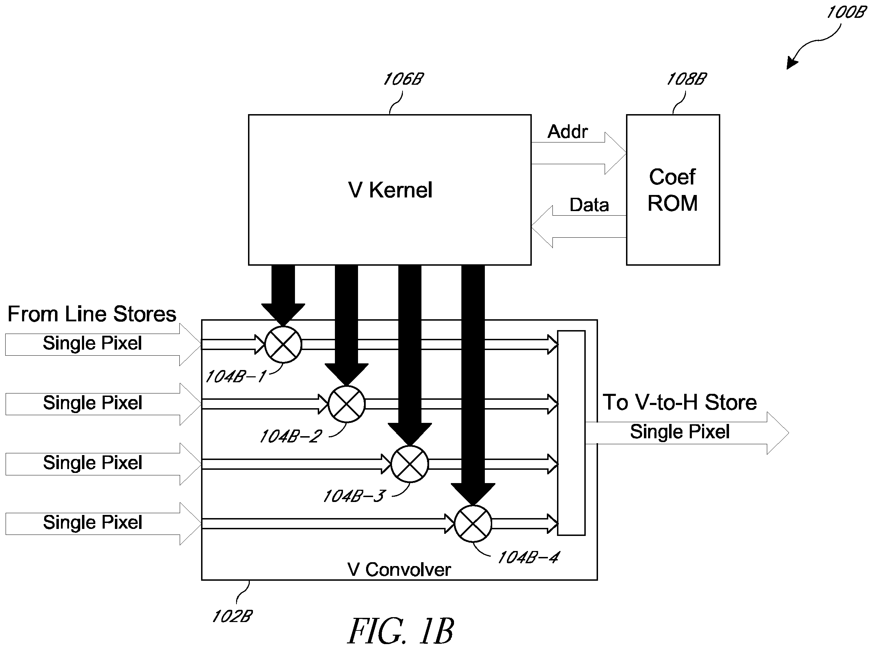

Figure 1B illustrates an example single pixel vertical scaling engine 100B. As will be discussed, the vertical scaler 100B may utilize a convolver module 102B that takes a single pixel from a respective horizontal line store (wherein the lines may be sequentially adjacent), and convolves the single pixel from each respective horizontal line store in parallel with an adaptive kernel having a set of weights (filter coefficients) to generate a corresponding product - the scaled pixel. The convolution operation may apply a matrix to an image, and add weighted values of neighboring pixels together to generate the scaled pixel.

In particular, as noted above, a given line store may store a complete respective horizontal line (or a portion thereof). The line stores feed respective line pixels, one at a time, into parallel convolvers. Each pixel from the respective line stores is convolved (using a respective convolver 104B) with a corresponding kernel weight/coefficient (accessed by a vertical kernel addressing circuit 106B from a coefficient memory 108B (e.g., non-volatile memory)) to generate a product of the pixel and weight. Different weights/coefficients may be used for each horizontal line. For example, if there are four line stores there may be four convolvers 104B-1, 104B-2, 104B-3, 104B-4, and a set of four corresponding weights/coefficients may be used. Of course there may be fewer or additional convolvers. The same weight/coefficient may be utilized for each pixel in a given line (or for most pixels in a given line), and the weight/coefficient set may be updated when the next set of lines are being read in and scaled.

As noted above, the vertical kernel addressing circuit 106B may control address lines to the coefficient memory 108B to access corresponding vertical scaling algorithm weights/coefficients. The vertical kernel addressing circuit 106B may select the coefficients/weights based on the current line being scaled, the amount of scaling being performed, whether the pixel being scaled is an edge pixel, inherent design resolution (the number of mathematical bits being used to calculate scale factors), and/or sub-pixel offsets. The convolver module 102B output may then be stored in a vertical-to-horizontal data store. As will be discussed elsewhere herein, the horizontal scaler may access the vertically scaled data from the vertical-to-horizontal store, and perform horizontal scaling.

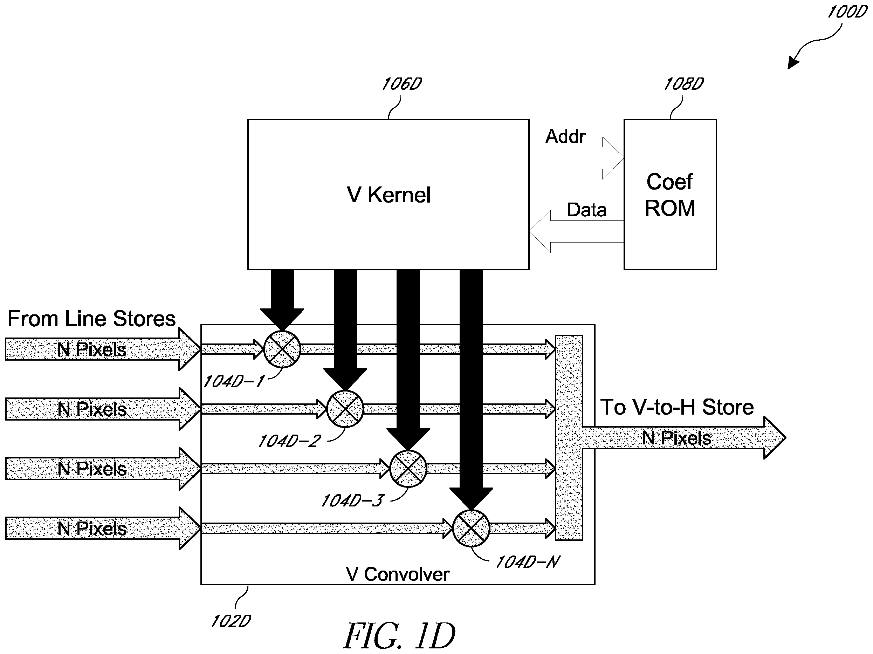

The single-pixel vertical scaler 100B illustrated in Figure 1B may be replicated to provide a N-pixel vertical scaler 100D as illustrated in Figure 1D. Rather than receive at a convolver 1 pixel at a time from a given line store, multiple (N) pixels at a time are received at a time for a given line and each pixel may be convolved using corresponding convolvers 104D with a corresponding coefficient/weight. Thus, in this example, there are N convolvers per line to convolve the N pixels in parallel, with four sets 104D-1, 104D-2, 104D-3, 104D-4 of N-pixel convolvers for four respective lines (although there may be more or fewer line stores and sets of N-pixel convolvers). As similarly discussed above, all (or most) pixels in a given line are convolved using the same coefficient/weight, and different coefficients/weights may be used for different lines. Thus, the complexity of the vertical kernel addressing circuit 106D may not materially increase as the number of pixels being vertically scaled in parallel for a given line increases, and the amount of memory 108D needed to store the vertical kernel coefficients/weights may not materially increase.

The example scaler can implement different kernels such as, by way of example Bilinear interpolation that interpolates pixel color values, Bicubic interpolation, Lanczos resampling, or other kernel that fits into the pixel representation being used (e.g., a two dimension 4-pixel representation).

Various scaling algorithms may be used in generating and/or accessing the coefficients/weights. For example, optionally, a two dimensional FIR (Finite Impulse Response) filter may be utilized, where a fixed number of coefficients are applied to each image pixel and where the coefficients do not change across the image. By way of further example, a convolution kernel may be used, where coefficients are continuously calculated across the images lines and pixels in real time. Utilization of a convolution kernel advantageously generally produces more accurate scaling than the FIR filter approach.

By way of further example, various modifications or adaptions of a convolution kernel may be used. For example, curve loading, an adaptation of the convolution kernel method, may be used. In curve loading, all (or large numbers of) possible coefficients are pre-calculated and stored in memory. The convolution kernel address logic may then access the pre-calculated coefficients from memory based on, by of example, scale factor, inherent design resolution (the number of mathematical bits being used to calculate scale factors), sub-pixel offsets, and/or any boundary/edge conditions that come into play (e.g., whether the pixel being scaled is an edge pixel). Advantageously, utilizing curve loading, any scaling curve may be pre-calculated and loaded into memory, thus offering enhanced flexibility.

Optionally, weights/coefficients may be adjusted to improve accuracy when scaling pixels at the edge of an image as will now be described.

When performing scaling far from the edge of the input image, the convolution kernel matrix operates on pixels that lie before and after the center of an output pixel. However, it is a challenge to scale close to the edges of the image because the kernel refers to non-existing pixels (that is, the kernel matrix would be convolved with non-existent pixels beyond the image edge). Because conventional scaling often results in inaccuracies at the image edges, optionally the edge accuracy is improved by adjusting the coefficients as the scaler approaches the edges to ensure a high degree of accuracy and sharpness. This approach addresses the edge-scaling challenge in such a way that the average brightness of the output pixels at the image edges is made to be the same or about the same as the average brightness of non-edge interior pixels. Such equalization of pixel brightness is optionally performing by modifying the filter impulse response function at the edges of the input image (referred to as fade-in and fade-out in regions).

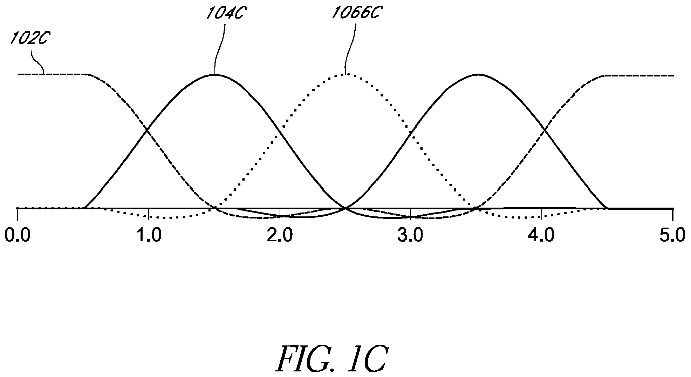

Referring to Figure 1C, fade-in and fade-out regions with respect to filter impulse response curves are illustrated. Curve 106C is an unmodified filter impulse response curve. Curve 102C illustrates an impulse response curve/function modified so it has a constant value of 1.0 in the ranges of 0 to 0.5 and 4.5 to 5. The impulse response curve/function 104C is modified so that it has the value of 0.0 in these ranges.

In an example process, when the kernel needs a pixel lying beyond the left edge of the image, pixel 0 (the left-most pixel in the corresponding line) is actually accessed and the modified curves are applied (where the impulse response function curve has been modified to have value of 1.0). As a result, the input pixel is simply copied unmodified to the output. A similar process is performed at the right edge of the image. Visually, such processing results in image edges having the same (or about the same) apparent brightness as the input pixels, thereby providing excellent results for still or video images.

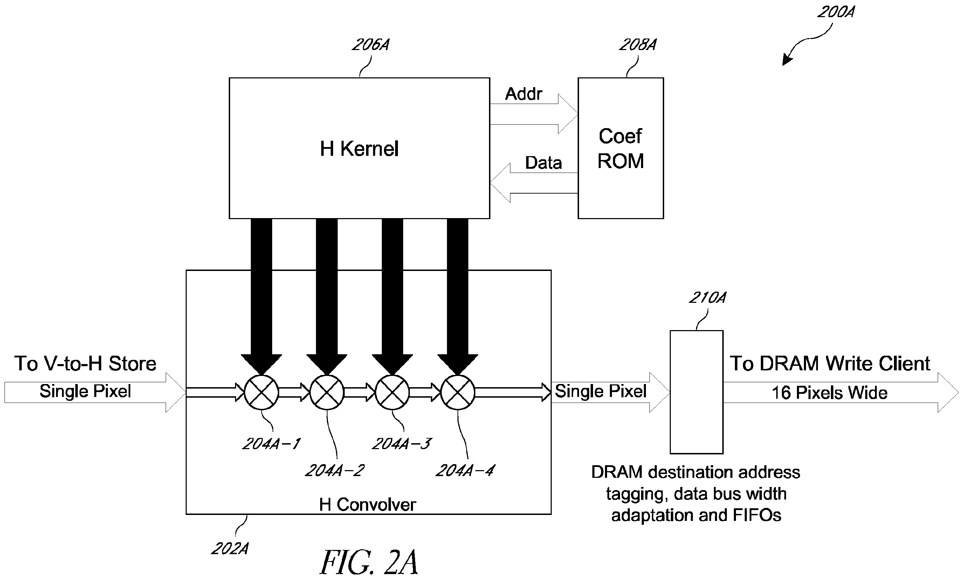

Figure 2A illustrates an example single pixel horizontal scaler 200A. A single pixel at a time is received at the single pixel vertical scaler module 202A from the vertical-to-horizontal data store. The pixel is sequenced through a pipeline, including a series of convolvers 204A-1, 204A-2, 204A-3, 204A-4, wherein the pixel is convolved at each convolver with a corresponding horizontal kernel weight. Thus, another pixel may be fed into the first convolver stage 204A-1 of the pipeline at each clock cycle, and sequenced through the pipeline to the next convolver (where it is convolved with the corresponding coefficient/weight) each clock cycle. A horizontal kernel addressing circuit 206A may control address lines to the coefficient memory 208A to access corresponding horizontal scaling algorithm weights/coefficients. The horizontal kernel addressing circuit 206A may select the coefficients/weights based on the current line being scaled, the scale factor being used, the inherent design resolution (the number of mathematical bits being used to calculate scale factors), sub-pixel offsets, and/or any boundary/edge conditions that come into play (e.g., whether the pixel being scaled is an edge pixel).

In this example, there are four convolvers 204A-1, 204A-2, 204A-3, 204A-4 in the pipeline (although optionally, the pipeline may include more or less convolvers). Each pixel for a given line may be convolved with the same coefficient/weight at a given convolver. Thus, in the illustrated example, a set of four coefficients/weights may be used for the set of four convolvers. The output is stored in memory 210A (e.g., DRAM memory). Horizontal scaled pixels are buffered in words (e.g., up to 16 pixel wide words, or other width words, such as 8 bit, 32 bit, or 64 bit words) so that memory write operations may be performed efficiently.

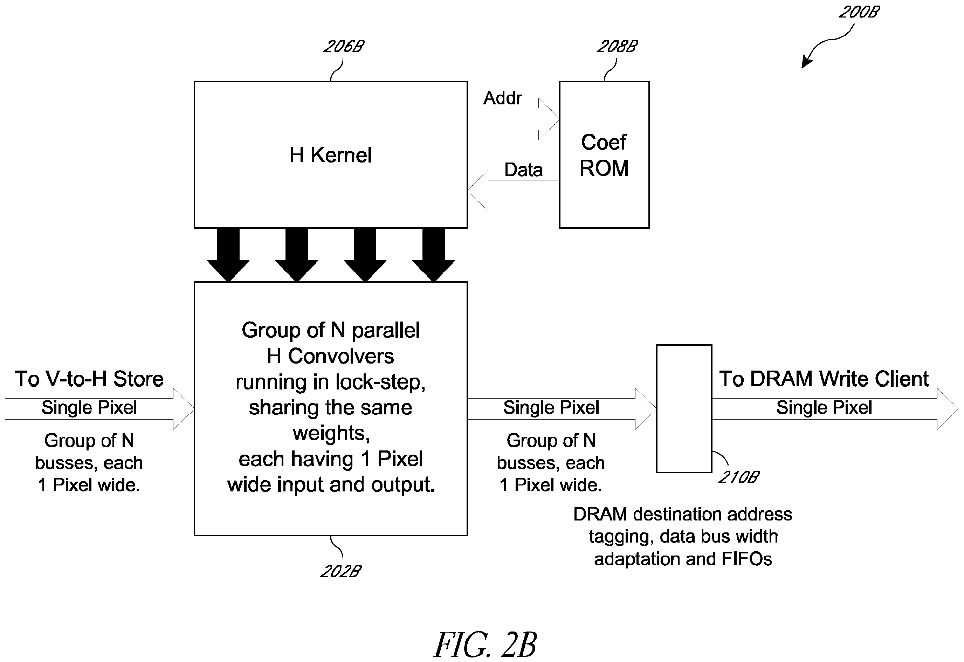

The single-pixel horizontal scaler 200A illustrated in Figure 2A may be replicated to provide N-parallel horizontal scalers 202B as illustrated in Figure 2B. A group of N-busses, each 1 pixel wide, may be used to receive the vertical scaled pixel from the vertical-to-horizontal store. The N-pixel horizontal scalers 202B may be run in lockstep, share the same kernel weights, each having a 1 pixel wide input and a 1 pixel wide out. A group of N-buses, each 1 pixel wide, routes the vertically/horizontally scaled output to memory 210B. Because the N-pixel horizontal scalers may be run in lockstep, and may share the same kernel weights, the number of parallel horizontal convolvers may be increased without materially increasing the complexity of the horizontal kernel addressing circuitry 206B, and without materially increasing the amount of memory 208B needed to store the horizontal kernel weights.

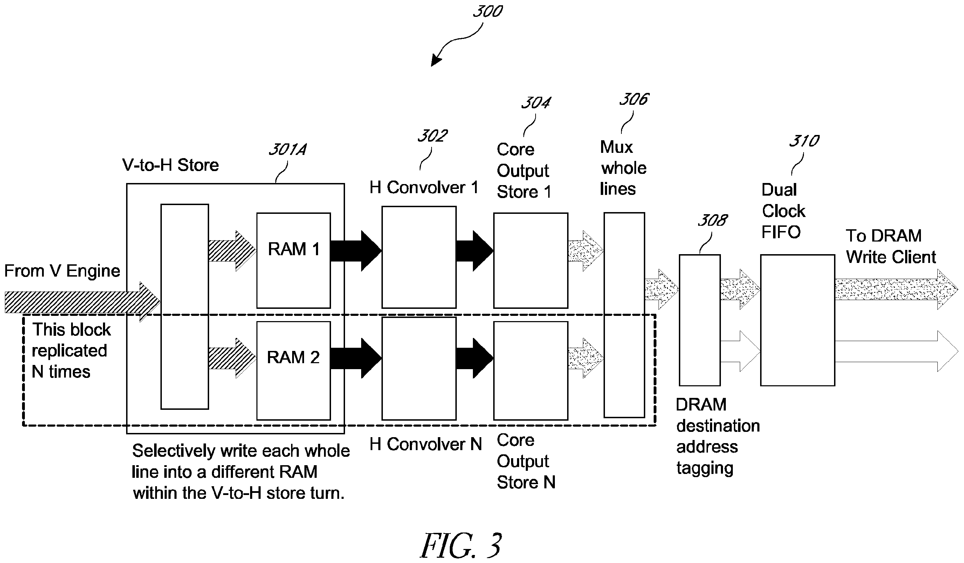

Figure 3 illustrates a higher level block diagram of an example horizontal scaler and related components 300. In this example, the vertical-to-horizontal data store 301 receives vertically scaled pixels from the vertical scaler via an N-pixel wide data bus. Each whole line is selectively written, via N-pixel wide data buses, into a different memory having respective memory outputs. Pixels are then read out, via 1-pixel wide data buses, from the memories 301 into respective parallel horizontal convolvers 302. The horizontally scaled pixels output from the horizontal convolvers 302 are provided via 1-pixel wide data buses to corresponding output data stores 304. The output data stores 304 may be sized to each store a complete horizontal line of pixels. The output from the output data stores 304 are provided via multi-pixel wide data buses (e.g., 16 pixel wide data buses) to a multiplexer 306. The multiplexer 306 sequentially muxes the data from each output data store to memory (e.g., DRAM) destination address tagging logic 308. The destination address tagging logic 308 generates corresponding address tags for each 16 bits (or other memory width) of pixel data, where the tags indicate where the corresponding pixel data belongs, so that when the scaled pixel data is stored at the destination memory it may be organized to recreate the image.

The scaled pixel data is then provided, with the destination address tagging, to the FIFO 310. The FIFO 310 may be a single clock FIFO or may optionally be a dual clock FIFO 310, where the FIFO input is clocked using a first clock, and the FIFO output is clocked using a second clock. The output of the FIFO 310 is then read out and provided, via a via multi-pixel wide data bus (e.g., 16 pixel wide data bus), to a DRAM write client.

The conversion from single bit buses to multi-bit buses or single pixel buses to multi-pixel buses enables the scaled pixel data to be more efficiently written to Double Data Rate Synchronous Dynamic Random-Access Memory (DDR RAM) more readily). Further, the disclosure output circuitry enables the large amounts of scaled pixel data being generated using the multi-pixel vertical scaling engine and the multiline horizontal scaling engine to be stored at high speed and provided at high speed to the pixel data destination.

Advantageously, the modular approach to replicating the multi-pixel vertical scaler to provide N multi-pixel vertical scalers and to replicate the multiline horizontal scaler to provide N multiline horizontal scalers enables the corresponding circuit design to be user-definable and efficiently created for any desired number of multi-pixel vertical scalers and multiline horizontal vertical scalers. For example, the use of VHDL-Generics clauses may be utilized to enable a designer to specify the size and complexity of the desired scaler by specifying the desired value of "N" (the number of lines and pixels the scaler is to process in parallel). For example, by specifying the desired N appropriately, the scaler may be sized and have the capability to process 2K, 4K, 8K, 16K or other size image data. Thus, the designer can choose to instantiate a scaler of any resolution suitable to the desired performance characteristics. Further, making a change to a VHDL generic, Verilog Parameter, or the like will propagate the change everywhere that the generic is used. A generic map statement can map the desired new values in the component.

Thus, optionally, a scaler design may be altered from single-pixel implementation to an N-pixel scaler by changing a single user variable at compile time.

For example, if a particular logic device (e.g., an FPGA) can run at around at about a 150MHz clock rate, different scaler capabilities may be obtained by changing the VHDL-Generic or Verilog Parameter N as indicated in Table 1. By changing the value of N from 1 to 16, the scaler may go from being able to process pixels at a rate of 150 MPixels/second (corresponding to HD 1080p60 - approximate resolution of 1920 x 1080 pixels, at 60 frames/second (fps)) to 2400 MPixels/second (corresponding to 8K60 - approximate resolution of 7680 x 4320 pixels, at 60 fps).

Table 1: Scaling capabilities at 150MHz

| N | MPixels/Sec | Approx. Max Resolution | Format |
|---|---|---|---|
| 1 | 150 | 1920 x 1080 fps 60 | HD 1080p60 |
| 2 | 300 | 3840 x 2160 fps 30 | 4K30 |
| 4 | 600 | 3840 x 2160 fps 60 | 4K60 |
| 8 | 1200 | 7680 x 4320 fps 30 | 8K30 |
| 16 | 2400 | 7680 x 4320 fps 60 | 8K60 |

By way of further example, if a particular logic device (e.g., an FPGA) can run at about a 300 MHz clock rate, different scaler capabilities may be obtained by changing the VHDL-Generic N as indicated in Table 2. By changing the value of N from 1 to 16, the scaler may go from being able to process pixels at a rate of 300 MPixels/second (corresponding to 4K30 - approximate resolution of 3840 x 2160 pixels, at 30 fps) to 4800 MPixels/second (corresponding to 8K120 or 16K30 - approximate resolution, respective of 7680 x 4320 at 120 fps and 15360 x 8640 at 30 fps).

Table 2: Scaling capabilities at 300MHz

| N | MPixels/Sec | Approx. Max Resolution | |
|---|---|---|---|
| 1 | 300 | 3840 x 2160 p30 | 4K30 |
| 2 | 600 | 3840 x 2160 p60 | 4K60 |
| 4 | 1200 | 7680 x 4320 p30 | 8K30 |
| 8 | 2400 | 7680 x 4320 p60 | 8K60 |
| 16 | 4800 | 7680 x 4320 p120 15360 x 8640 p30 | 8K120 16K30 |

Other possible approaches to increasing the performance of a scaler may not be so modular, and so disadvantageously may not be increased in size without significant rewriting or requiring entirely new VHDL or Verilog code.

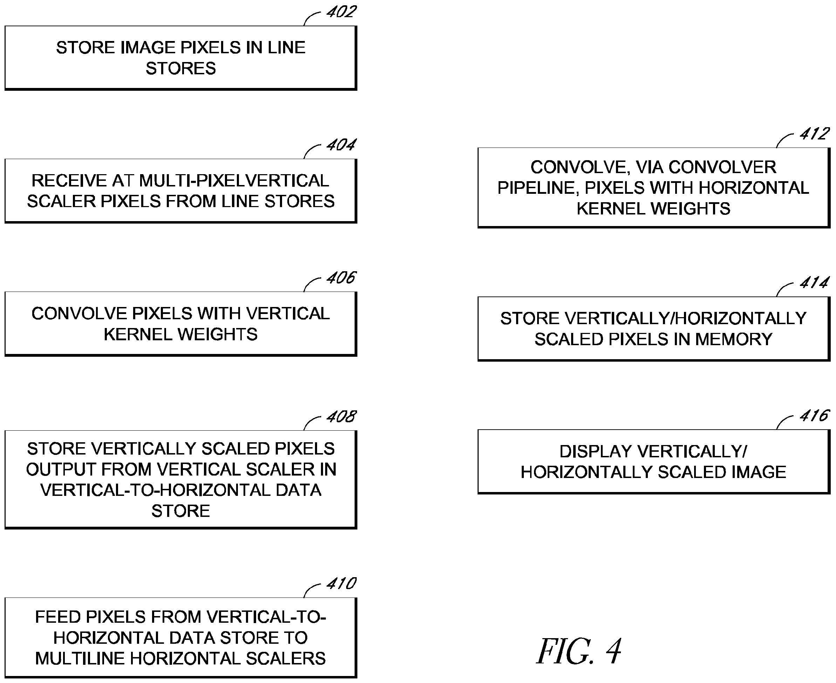

Figure 4 illustrates an example process for scaling an image (e.g., a video frame, a still photograph, or other image).

At block 402, image pixels are stored in respective line store memory, wherein a given line store memory stores a horizontal line of the image. At block 404, the line stores communicate N respective pixels to a multi-pixel vertical scaler. The multi-pixel vertical scaler includes N parallel convolvers for each line store. For example, if four pixels of a given line are to be vertically scaled at the same time, there may be four parallel convolvers for each line store. At block 406, respective pixels from the line stores are convolved, in parallel, with respective vertical kernel weights, to generate vertically scaled pixels. At block 408, vertically scaled pixels are stored in a vertical-to-horizontal store. Optionally, each whole line is stored in a respective memory element with a respect memory output (e.g., a 1 pixel wide data bus). At block 410, the outputs of the vertical-to-horizontal store are provided, one pixel at a time to a respective horizontal convolver modules of a multiline horizontal scaler. Each horizontal convolver module includes a horizontal convolver pipeline. At block 412, at each horizontal convolver pipeline, the vertically scaled pixels are shifted through the serial chain of convolvers, wherein a given convolver convolves respective pixels with respective horizontal kernel weights. At block 414, the outputs of the horizontal convolver modules are stored in memory (e.g., in 16 pixel wide memories). At block 416, the vertically/horizontally scaled image is displayed by a display device (e.g., a video conference display, a monitor, a television, a mobile phone, a tablet computer, etc.).

As will now be described, an additional challenge of scaling is that errors may build up during the scaling as a result of approximation errors.

As similarly noted above, convolution is an integral of a product of two functions. In the discrete domain, the integral is approximated by summing products of samples. However, this approximation introduces approximation errors that need to be corrected.

Optionally, such approximation errors may be corrected on the fly across both the vertical axis and the horizontal axis to prevent error build up from creating visible artefacts using the following example process. In order to maintain the brightness of the output image at the same level as the input image, the sum of weights applied to input pixels needs to equal 1.0. For example, if four weights are used (as illustrated in Figures 1B, ID, 2A), then weights w0 + w1 + w2 + w3 should be equal to 1.0. However, if discrete integration is utilized, the sum of the weights will not exactly equal 1.0.

An ideal solution would involve adding the four weights together and then divide each weight by the sum. However, in a hardware implementation, such division adds complication. A less complex process will now be described that in practice gives about the same human perceptible visual quality.

In an example process, error compensation is performed by summing the weight coefficients (all four weight coefficients in this example) and subtracting the sum of the coefficients from the ideal value (1 in this example). The difference is the total approximation error. The approximation error is then added to the weight of the pixel that lies near (e.g., nearest) or at the center of the kernel, which is typically going to be the highest (or tied for the highest) weight, to thereby generate an adjusted weight..

In the present example, with four weights:

$$\text{Sum of the weights} = w0 + w1 + w2 + w3$$

$$\text{approximation error} = 1.0 - \text{Sum of the weights}$$

$$w2 \text{ (which corresponds to the pixel that is near the center)} = (w2 + \text{approximation error})$$

The foregoing error compensation process slightly adjusts the weight of the most (or one of the most) central coefficient in the kernel so the sum of the weights is now exactly 1.0. Because the adjusted weight has the highest value of the weights, and the error is relatively small, the correction has a relatively small affect. Visual tests conducted demonstrate that visible artefacts are not added by this less complex approximation error generation process.

Another disadvantage (beyond complexity) of utilizing a division operation in performing calculations is that such division operations are often imprecise because the representation of a fraction (e.g., 0.3) in binary form may require an infinite number of bits to be precise. Disadvantageously, truncating the result of division (the quotient) is inherently imprecise, and may make the resulting value smaller than ideal.

In preparation for scaling, the pixel size is calculated using a division operation. The scaling algorithm traverses the image and calculates the pixel position by adding the size again and again, each time possibly introducing a division error. If the division error is not corrected it will accumulate over the distance as the image is traversed. As a result, the algorithm may finish before reaching the end of image.

To overcome the foregoing technical problem, the disclosed scaler optionally evaluates the truncation error and compensates for the truncation error. An example process for compensating for the truncation error spreads the position error evenly or approximately evenly throughout the width of the image. At uniformly spaced distances, epsilon (an upper bound on the relative error due to rounding or truncation) is added to the total distance to correct the total distance. The sum of epsilons is equal to the total error. As a result, the error disappears and after performing the n number of steps the algorithm stops exactly at the end of image.

Although the above description relates to image scaling, the multi-pixel/multiline technologies and techniques disclosed therein are not limited to scaling applications. For example, the multi-pixel/multiline technologies and techniques (e.g., processing vertical and horizontal information differently) may be applied to any form of 2D image (e.g., still or video images) processing. Various types of image processing (e.g., image enhancement, noise reduction, contrast enhancement, and the like) may encounter similar problems as those discussed herein with respect to image scaling. For example, image scaling includes a filtering process. Other image processing processes, such as image enhancement, noise reduction, contrast enhancement, may also utilize a filtering process and so may benefit from the disclosed dual approach of multi-pixel/multiline processing in order to increase their bandwidth in a scalable manner.

Terminology

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

Unless the context clearly requires otherwise, throughout the description and the claims, the words "comprise," "comprising," and the like are to be construed in an inclusive sense, as opposed to an exclusive or exhaustive sense;

that is to say, in the sense of "including, but not limited to." The term "coupled" is used to refer to the connection between two elements, the term refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list.

The above detailed description of aspects and embodiments of the inventions are not intended to be exhaustive or to limit the inventions to the precise form disclosed above. While specific embodiments of, and examples for, the inventions are described above for illustrative purposes, various equivalent modifications are possible within the scope of the inventions, as those skilled in the relevant art will recognize. For example, while processes or blocks are presented in a given order, alternative embodiments may perform routines having steps, or employ systems having blocks, in a different order, and some processes or blocks may be deleted, moved, added, subdivided, combined, and/or modified. Each of these processes or blocks may be implemented in a variety of different ways. Also, while processes or blocks are at times shown as being performed in series, these processes or blocks may instead be performed in parallel, or may be performed at different times.

The teachings of the inventions provided herein can be applied to other systems, not necessarily the system described above. The elements and acts of the various embodiments described above can be combined to provide further embodiments.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding, with or without author input or prompting, whether these features, elements and/or states are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C.

While certain embodiments of the inventions have been described, these embodiments have been presented by way of example only, and are not intended to limit the scope of the disclosure. Indeed, the novel methods and systems described herein may be embodied in a variety of other forms; furthermore, various omissions, substitutions and changes in the form of the methods and systems described herein may be made without departing from the spirit of the disclosure. The accompanying claims and their equivalents are intended to cover such forms or modifications as would fall within the scope and spirit of the disclosure.

**Claims**

1. An image processor, comprising:

   multi-pixel vertical processing circuit comprising a plurality of vertical processing circuits configured to receive image pixels from respective image line stores and to convolve, in parallel, the received image pixels with respective coefficients and output vertically processed pixels to a first memory;
   a multiline horizontal processing module comprising:

   a plurality of horizontal processing circuits configured to receive pixels from respective image line stores, wherein a given horizontal processing circuit in the plurality of horizontal processing circuits comprises:

   an input configured to receive one vertically processed pixel at a time from the first memory;
   a convolver pipeline comprising a plurality of convolver stages configured to shift vertically processed pixels from the first memory through the plurality of convolver stages and, at a given stage, convolve the vertically processed pixels with respective horizontal kernel coefficients in a set of horizontal kernel coefficients,

the convolver pipeline configured to transfer pixels from a last convolver stage of the pipeline of convolvers to a second memory, wherein the pixels from the last convolver stage of the pipeline are horizontally and vertically processed,

wherein the pixels stored in the second memory are arranged to be displayed as a processed image.

2. The image processor of claim 1, wherein the convolver pipeline comprises at least four convolver stages.

3. The image processor of claims 1 or 2, further comprising a multiplexer, the multiplexer having inputs in communication with outputs of the second memory, and the multiplexer having outputs coupled to a destination address tagging circuit.

4. The image processor of claims 1, 2, or 3, further comprising:

a multiplexer;
a destination address tagging circuit;
a first-in-first-out (FIFO) circuit; and
the multiplexer having inputs in communication with outputs of the second memory, the multiplexer having outputs coupled to the destination address tagging circuit, the destination address tagging circuit having outputs coupled to inputs of the FIFO.

5. The image processor of claims 1, 2, 3, or 4, wherein the convolver pipeline is configured to transfer pixels from the last convolver stage of the convolver pipeline to the second memory one pixel at a time, and the second memory is configured to output at least 16 vertically and horizontally scaled bits at a time.

6. The image processor of claim 1, 2, 3, 4, or 5, further comprising a memory that stores all possible kernel coefficients and vertical and horizontal addressing circuits configured to access kernel coefficients based at least in part on an image scaling factor.

7. The image processor of claims 1, 2,3, 4, 5, or 6, wherein the image processor is configured to calculate coefficients in real time.

8. The image processor of claims 1, 2,3, 4, 5, 6, or 7, wherein the image processor is configured to scale up and/or scale down images.

9. The image processor of claims 1, 2,3, 4, 5, 6, 7, or 8, wherein the image processor is configured to perform contrast enhancement.

10. A method, comprising:

using a multi-pixel vertical processing module comprising a plurality of multi-pixel vertical processing circuits to convolve, in parallel, image pixels received from respective line stores with respective coefficients and outputting vertically processed pixels to a first memory;
using a multiline horizontal processing module to access from the first memory and to horizontally process the vertically processed pixels using parallel convolver pipelines comprising a plurality of convolver stages that generate products of the vertically processed pixels with respective coefficients;
transferring vertically and horizontally processed pixels from a last convolver stage of each of the convolver pipelines to a second memory,
wherein the pixels stored in the second memory are arranged to be displayed as a processed image.

11. The method of claim 10, the method further comprising:

multiplexing the vertically and horizontally processed pixels from the second memory to a destination address tagging circuit;
tagging, using the destination address tagging circuit, the multiplexed vertically and horizontally processed pixels with corresponding address tags; and
storing the multiplexed vertically and horizontally processed pixels with corresponding address tags in a first-in-first-out (FIFO) circuit.

12. The method of claims 10 or 11, the method further comprising:

transferring pixels from the last convolver stage of each of the convolver pipelines to the second memory one pixel at a time, wherein the second memory comprises an input for each the convolver pipelines; and
outputting a plurality of vertically and horizontally scaled bits at a time from the second memory.

13. The method of claims 10, 11, or 12, the method further comprising storing all possible kernel coefficients useable by the multiline horizontal processing module.

14. The method of claims 10, 11, 12, or 13, the method further comprising scaling up or down at least one image.

15. The method of claims 10, 11, 12, 13, or 14, the method further comprising performing noise reduction on at least one image.

*FIG. 1A*

EP 3 748 571 A1

EP 3 748 571 A1

FIG. 1B

*102C* *104C* *1066C*

FIG. 1C

FIG. 1D

*FIG. 2A*

*200B*

*206B*

*208B*

H Kernel

Addr →

← Data

Coef
ROM

**To V-to-H Store**

Single Pixel →

Group of N
busses, each
1 Pixel wide.

Group of N parallel
H Convolvers
running in lock-step,
sharing the same
weights,
each having 1 Pixel
wide input and output.

Single Pixel →

Group of N
busses, each
1 Pixel wide.

*210B*

**To DRAM Write Client**

Single Pixel →

DRAM destination address
tagging, data bus width
adaptation and FIFOs

*202B*

*FIG. 2B*

FIG. 3

STORE IMAGE PIXELS IN LINE STORES — 402

RECEIVE AT MULTI-PIXEL VERTICAL SCALER PIXELS FROM LINE STORES — 404

CONVOLVE PIXELS WITH VERTICAL KERNEL WEIGHTS — 406

STORE VERTICALLY SCALED PIXELS OUTPUT FROM VERTICAL SCALER IN VERTICAL-TO-HORIZONTAL DATA STORE — 408

FEED PIXELS FROM VERTICAL-TO-HORIZONTAL DATA STORE TO MULTILINE HORIZONTAL SCALERS — 410

CONVOLVE, VIA CONVOLVER PIPELINE, PIXELS WITH HORIZONTAL KERNEL WEIGHTS — 412

STORE VERTICALLY/HORIZONTALLY SCALED PIXELS IN MEMORY — 414

DISPLAY VERTICALLY/ HORIZONTALLY SCALED IMAGE — 416

*FIG. 4*

Europäisches
Patentamt

European
Patent Office

Office européen
des brevets

# EUROPEAN SEARCH REPORT

Application Number

EP 20 16 3933

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/061577 A1 (BOGUSZ MICHAL [GB] ET AL) 2 March 2017 (2017-03-02) * paragraphs [0008], [0009]; figures 1b, 5 * ----- | 1-15 | INV. G06T1/20 G06T3/40 G06T5/00 |
| A | US 2007/041662 A1 (JEFFREY ERIC [CA]) 22 February 2007 (2007-02-22) * paragraphs [0039] - [0048]; figures 5,6 * ----- | 1-15 | |
| A | AU 61709 99 A (CANON KK) 13 July 2000 (2000-07-13) * the whole document * ----- | 1-15 | |

TECHNICAL FIELDS
SEARCHED      (IPC)

G06T

The present search report has been drawn up for all claims

| Place of search | Date of completion of the search | Examiner |
|---|---|---|
| Munich | 20 July 2020 | Tillier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 3933

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2020

| Patent document cited in search report | | Publication date | Patent family member(s) | | Publication date |
|---|---|---|---|---|---|
| US 2017061577 | A1 | 02-03-2017 | CN 106488163 A | | 08-03-2017 |
| | | | GB 2541742 A | | 01-03-2017 |
| | | | KR 20170026191 A | | 08-03-2017 |
| | | | US 2017061577 A1 | | 02-03-2017 |
| US 2007041662 | A1 | 22-02-2007 | NONE | | |
| AU 6170999 | A | 13-07-2000 | NONE | | |

EPO FORM P0459

For more details about this annex : see Official Journal of the European Patent Office, No. 12/82